# FASCICULE DE BREVET EUROPEEN

(11) **EP 2 086 248 B1**
(45) Date de publication et mention de la délivrance du brevet: **30.04.2014**
(21) Numéro de dépôt: 09151555.1
(22) Date de dépôt: 28.01.2009
(51) Int. Cl.: H04Q 11/00

(54) **Procédé pour contrôler l'établissement d'une connexion dans un réseau optique**
Verfahren zur Kontrolle der Herstellung einer Verbindung in einem optischen Netz
Method for controlling the establishment of a connection in an optical network

(30) Priorité: 29.01.2008 FR 0850528
(43) Date de publication de la demande: 05.08.2009
(73) Titulaire: Alcatel Lucent, 75007 Paris (FR)
(72) Inventeur: Peloso, Pierre, 91620 Nozay (FR); Ronot, Benoit, 91620 Nozay (FR); Vandenweghe, Cedric, 91620 Nozay (FR)
(74) Mandataire: Sciaux, Edmond

(56) Documents cités:
- US-A1- 2005 030 951
- US-A1- 2007 133 800
- US-A1- 2007 189 663

## Description

L'invention se rapporte au domaine des réseaux optiques, en particulier au domaine des réseaux optiques transparents qui sont capables de commuter des signaux dans le domaine photonique pour établir des connexions photoniques entre des éléments de réseau distants.

Un tel réseau est décrit dans le document US 2007/189 663.

Dans les réseaux optiques, il existe un besoin croissant de bande passante, de flexibilité d'utilisation des ressources et de gestion de la qualité de service. Différents constructeurs ont cherché à répondre à ces besoins au moyen de réseaux optiques à commutation automatique (ASON). Toutefois, en raison des spécificités de chaque système de gestion de réseau, ces solutions propriétaires sont difficiles à combiner et à intégrer dans un réseau hétérogène. Les réseaux optiques à plan de contrôle distribué de type GMPLS (Generalized Multi-Protocol Label Switching) posent les bases d'un plan de contrôle unifié pour contrôler des réseaux hétérogènes. Dans ces réseaux, les données sont transportées au moyen de connexions, aussi appelées Label-Swiched Paths (LSP).

Un but de l'invention est de fournir une méthode fiable pour contrôler l'établissement d'une connexion photonique dans un réseau optique.

Pour cela, l'invention fournit un procédé pour contrôler l'établissement d'une connexion dans un réseau optique, ledit établissement de connexion comportant une séquence d'étapes devant être effectuées successivement, caractérisé par le fait que ledit procédé comprend les étapes consistant à :
transmettre un message de contrôle de noeud en noeud le long d'un chemin de ladite connexion depuis un noeud d'entrée jusqu'à un noeud de sortie de la connexion, ledit message de contrôle comportant un champ d'indication d'étape pour indiquer une étape courante de l'établissement de la connexion,
effectuer une opération locale correspondant audit champ d'indication d'étape au niveau d'au moins un noeud le long du chemin de la connexion en réponse à la réception dudit message de contrôle
transmettre un acquittement d'étape depuis ledit au moins un noeud audit noeud d'entrée de la connexion après avoir terminé ladite opération locale correspondant au champ d'indication d'étape,
en réponse à la réception de l'acquittement d'étape dudit au moins un noeud, transmettre un autre message de contrôle de noeud en noeud le long du chemin de la connexion depuis le noeud d'entrée jusqu'au noeud de sortie de la connexion, dans lequel ledit champ d'indication d'étape indique une étape suivante dans ladite séquence d'étapes en tant qu'étape courante de l'établissement de la connexion.

Selon un mode de réalisation particulier, le noeud de sortie de la connexion transmet l'acquittement d'étape dans un message de contrôle devant être transmis de noeud en noeud le long du chemin de la connexion jusqu'au noeud d'entrée, ledit message de contrôle comportant le champ d'indication d'étape auquel l'acquittement d'étape correspond,
chaque noeud le long du chemin de la connexion transmettant ledit message de contrôle au noeud suivant après avoir terminé l'opération locale correspondant au champ d'indication d'étape.

L'acquittement peut être sous la forme d'une information implicite ou explicite plus ou moins détaillée dans le message de contrôle. Par exemple, un noeud du chemin de connexion est programmé pour interrompre la transmission du message de contrôle en direction du noeud d'entrée si l'opération locale échoue. Ainsi la réception du message de contrôle comportant le champ d'indication d'étape par le noeud d'entrée vaut au moins implicitement acquittement d'étape de tous les noeuds sans qu'une information supplémentaire doive être explicitée dans le message. Cependant, il est aussi possible d'inclure des informations explicites dans le message de contrôle, par exemple des indicateurs logiques de succès/échec, qui peuvent être détaillés noeud par noeud et/ou sous-opération par sous-opération ou qui peuvent être au contraire agrégés pour représenter tous les noeuds et/ou toutes les sous-opérations d'une étape. De préférence, un noeud pour lequel l'opération locale échoue envoie un message d'erreur au noeud d'entrée.

Selon un autre mode de réalisation particulier, un ou chaque noeud du chemin de connexion transmet un message d'acquittement au noeud d'entrée de la connexion après avoir terminé ladite opération locale,
ledit noeud d'entrée transmettant ledit autre message de contrôle après réception des messages d'acquittement de tous les noeuds devant effectuer une opération locale correspondant au champ d'indication d'étape.

Selon un mode de réalisation, le noeud d'entrée comporte, pour chaque étape de l'établissement de connexion, une liste des noeuds du chemin de connexion devant effectuer une opération locale, ce qui permet de déterminer si tous les acquittements d'étape attendus ont été reçus. Selon un autre mode de réalisation, un acquittement d'étape doit être reçu depuis tous les noeuds du chemin de connexion à chaque étape. Dans ce cas, un noeud est capable de transmettre un acquittement après avoir déterminé qu'il n'a aucune opération locale à effectuer dans l'étape courante.

Avantageusement, un noeud du chemin de connexion peut transmettre l'acquittement d'étape après avoir déterminé qu'il n'a aucune opération locale à effectuer dans l'étape courante.

Selon un mode de réalisation particulier, en réponse à la réception du message de contrôle, un ou chaque noeud du chemin de connexion accède à une table d'opérations locales stockée dans ledit noeud pour déterminer ladite opération locale devant être effectuée en fonction du champ d'indication d'étape.

Deux modes de transmission peuvent être envisagés pour la transmission des messages de contrôle par les noeuds situé sur le chemin de la connexion. Selon un premier mode de transmission, un noeud transmet le message de contrôle avec le champ d'indication d'étape au noeud suivant le plus rapidement possible, indépendamment de l'état d'avancement de l'opération locale devant être effectuée par ledit noeud. Ce mode de transmission permet de faire passer le message de contrôle le plus rapidement possible à tous les noeuds de la connexion, afin de déclencher rapidement les opérations locales correspondantes dans les noeuds. Ce mode de transmission convient notamment pour des opérations locales aptes à être effectuée parallèlement dans différents noeuds.

Selon un second mode de transmission, un noeud transmet le message de contrôle avec le champ d'indication d'étape au noeud suivant uniquement lorsque l'opération locale devant être effectuée par ledit noeud a atteint un certain stade d'avancement, par exemple est sensiblement terminée. Ce mode de transmission permet de déclencher séquentiellement les opérations locales correspondantes dans l'ordre des noeuds. Ce mode de transmission convient notamment pour des opérations locales devant être effectuées séquentiellement dans l'ordre des noeuds le long du chemin de la connexion, par exemple le réglage de la puissance du signal optique.

Dans l'établissement de la connexion, le mode de transmission le mieux adapté peut être le premier ou le second selon la nature de l'étape courante et de l'opération locale correspondante. Selon un mode de réalisation préféré, les noeuds sélectionnent le premier ou le second mode de transmission du message de contrôle à chaque fois en fonction du champ d'indication d'étape. Par exemple, le mode de transmission du message de contrôle peut être spécifié dans la table des opérations locales du noeud pour chaque valeur du champ d'indication d'étape. Dans le protocle RSVP-TE, ces deux modes de transmission peuvent être mis en oeuvre à l'aide de réglages correspondants des temporisateurs des machines à états finis.

Selon un mode de réalisation, dans lequel la connexion est établie dans le domaine photonique et l'établissement de connexion comporte une étape de réglage de puissance d'un signal de ladite connexion photonique, ledit au moins un noeud effectue une opération de réglage de puissance dudit signal en réponse à la réception d'un message de contrôle comportant ledit champ d'indication d'étape correspondant à ladite étape de réglage de puissance et transmet ledit message de contrôle avec le champ d'indication d'étape au noeud suivant après avoir terminé ladite opération de réglage de puissance.

Ce mode de réalisation peut être appliqué à de nombreux types de dispositifs de modification de puissance du signal optique, notamment les atténuateurs optiques variables, les amplificateurs optiques à bande étroite ou large (par exemple SOA, EDFA ou autres), les commutateurs à sélection de longueur d'onde, les bloqueurs de longueur d'onde et les égaliseurs de spectre.

Selon un mode de réalisation particulier, l'établissement de connexion comporte une étape de préparation précédant l'étape de réglage de puissance et une étape de terminaison succédant à l'étape de réglage de puissance.

Selon un mode de réalisation particulier, au moins un noeud du chemin de connexion comporte un dispositif de modification de puissance devant être traversé par ledit signal de la connexion photonique et une unité de commande contrôlant ledit dispositif de modification de puissance selon une procédure de régulation automatique, l'opération locale correspondant à l'étape de préparation comportant, pour ledit au moins un noeud, une désactivation de ladite procédure de régulation automatique. Par exemple, une réactivation de ladite procédure de régulation automatique peut être effectuée dans l'étape de terminaison ou à la fin de l'étape de réglage.

De préférence, la procédure de régulation automatique est effectuée en fonction d'un profil de puissance souhaité prédéterminé et d'un signal de rétroaction sensible à la puissance du signal optique effectivement transmis en aval du dispositif de modification de puissance.

Le procédé peut être appliqué à tout type de réseau optique, avec ou sans conversion du trafic dans le domaine électrique au niveau des noeuds, avec ou sans multiplexage. Selon un mode réalisation préféré, le signal optique est transporté en multiplexage par division de longueur d'onde (WDM), ledit profil de puissance souhaité prédéterminé comportant une relation entre les puissances respectives de différents canaux de longueur d'onde multiplexés. Selon un mode réalisation préféré, la connexion est établie dans le domaine photonique.

Selon un mode de réalisation, au moins un noeud du chemin de connexion comporte un amplificateur optique large bande devant être traversé par ledit signal de la connexion photonique, l'opération locale correspondant à l'étape de préparation comportant, pour ledit au moins un noeud, un réglage dudit amplificateur optique large bande dans un mode de fonctionnement compatible avec les effets transitoires, l'opération locale correspondant à l'étape de terminaison comportant, pour ledit au moins un noeud, un réglage dudit amplificateur optique large bande dans un mode de fonctionnement normal tendant à stabiliser le réseau.

De préférence, les messages de contrôle sont des messages d'un protocole de signalisation convenant pour réserver des ressources de communication des noeuds le long du chemin de connexion. Par exemple, le protocole de signalisation est choisi dans le groupe comprenant RSVP et ses extensions.

Divers formats peuvent être utilisés pour transporter le champ d'indication d'étape dans ces protocoles. Par exemple le champ d'indication d'étape peut être prévu dans un objet ADMIN_STATUS du protocole RSVP-TE ou dans un objet dédié au réglage de la connexion.

L'invention fournit également un élément de réseau optique comportant des ressources de transport allouées à une connexion pour pouvoir transporter un signal de ladite connexion, des moyens de communication pour échanger des messages de contrôle avec au moins un noeud adjacent situé sur un chemin de ladite connexion, et moyens de commande pour effectuer les étapes consistant à, en réponse à la réception d'un message de contrôle comportant un champ d'indication d'étape en provenance d'un noeud d'entrée de la connexion, effectuer une opération locale correspondant audit champ d'indication d'étape, et transmettre en direction du noeud d'entrée de la connexion un message de contrôle comportant un acquittement d'étape après avoir terminé ladite opération locale correspondant au champ d'indication d'étape.

Une idée à la base de l'invention est de contrôler une procédure d'établissement de connexion comportant plusieurs étapes devant être effectuées successivement, et notamment une ou plusieurs étapes de réglage de puissance du signal, au moyen de messages de contrôle similaires à ceux qui sont disponibles dans les piles protocolaires GMPLS, dont le déploiement dans des réseaux hétérogènes est bien maîtrisé. Une autre idée à la base de l'invention est d'utiliser un tel message de contrôle, notamment du protocole RSVP-TE ou analogue, pour fonder un mécanisme à jeton assurant qu'une étape particulière est bien effectuée séquentiellement dans l'ordre des noeuds de la connexion.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
la figure 1 est une représentation schématique fonctionnelle d'un réseau optique dans lequel des modes de réalisation de l'invention peuvent être mis en oeuvre ;
la figure 2 est une représentation schématique fonctionnelle d'un noeud optique transparent du réseau de la figure 1 ;
la figure 3 est un diagramme représentant un procédé pour établir une connexion dans le réseau de la figure 1 selon un mode de réalisation de l'invention.

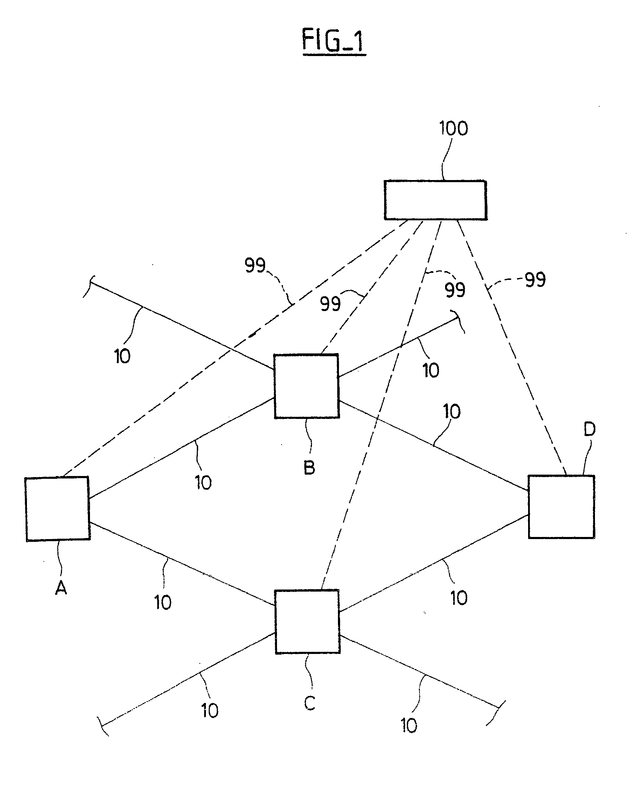

La figure 1 représente très schématiquement un réseau optique WDM comportant quatre noeuds de commutation A, B, C et D reliés par des liens optiques 10. Dans certains modes de réalisation, un appareil de gestion de réseau 100 est aussi prévu, mais ce n'est pas obligatoire. Le nombre de noeuds et la topologie du réseau de la figure 1 sont choisis uniquement pour les besoins de l'illustration et n'ont aucun caractère limitatif.

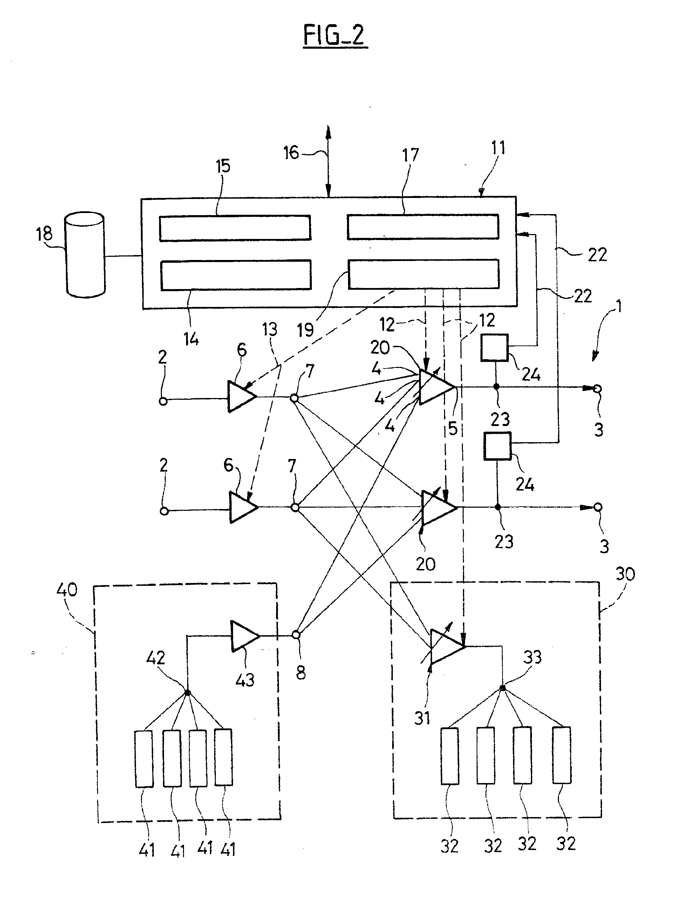

La figure 2 représente schématiquement l'architecture d'un noeud photonique 1 pouvant être utilisé pour réaliser les noeuds A, B, C et D. Le noeud 1 présente deux ports d'entrée 2 et deux ports de sortie 3, destinés à être reliés à des liens optiques 10. Ici, on a choisi pour l'illustration une architecture transparente de type diffusion-sélection (broadcast and select) basée sur des commutateurs à sélection de longueurs d'onde 20 (ou WSS pour wavelength sélective switch). D'autres architectures et des degrés de connectivité différents sont aussi possibles.

On rappelle qu'un commutateur à sélection de longueurs d'onde désigne un équipement qui peut être utilisé comme multiplexeur reconfigurable ou comme démultiplexeur reconfigurable. Lorsqu'il agit en tant que multiplexeur, comme montré sur la figure 2, les ports sélectionnables 4 servent d'entrées et un port commun 5 sert de sortie commune. Le commutateur à sélection de longueurs d'onde est capable d'aiguiller des canaux de longueurs d'ondes reçus sur les entrées respectives, sélectivement en fonction d'un signal de commande, vers la sortie commune de cet équipement. Cet équipement réalise ainsi une fonction de multiplexage reconfigurable sur des canaux de longueurs d'ondes dont les fréquences optiques sont alignées sur une ou plusieurs grilles prédéterminées. Il permet de fournir en sortie un canal sélectionné parmi les canaux reçus sur les entrées ou un multiplex de sortie constitué d'un ensemble de canaux sélectionnés parmi les canaux reçus. Sur chaque port d'entrée, on peut envoyer un canal, plusieurs canaux ou aucun canal.

La commutation des canaux à l'intérieur du commutateur à sélection de longueurs d'onde est produite par des organes de manipulation spatiale de la lumière, par exemple des micromiroirs actionnés par des microactionneurs MEMS ou des cellules à cristaux liquides. En plus de réaliser une sélection des canaux, ces organes sont capables de régler l'atténuation du signal pour chaque canal de longueur d'onde transmis. Ainsi, les commutateurs à sélection de longueurs d'onde 20 du noeud 1 servent à la fois à sélectionner les canaux de longueurs d'ondes devant être transmis vers les ports 3 et à régler leur puissance de sortie canal par canal. Par exemple, dans un WSS basé sur des MEMS, le niveau d'atténuation peut être réglé en modifiant l'alignement du faisceau réfléchi par rapport à un alignement optimal, de manière à introduire des pertes correspondant à un défaut d'alignement ou défaut de focalisation choisi. La relation entre la position ou la tension de commande du microactionneur et le niveau d'atténuation résultant peut être étalonnée et tabulée dans une mémoire du WSS pour être exploitée en cours de fonctionnement.

De nombreuses architectures de commutateurs à sélection de longueurs d'ondes sont connues pour remplir des fonctionnalités similaires, avec un nombre de ports plus ou moins grand. La figure 2 ne saurait donc être considérée comme limitative à cet égard.

A partir des ports d'entrées 2, les signaux WDM entrants sont amplifiés par des amplificateurs 6 et diffusés par des coupleurs 7 de type 1:3 vers les deux WSS 20 et un dispositif d'extraction 30 respectivement. Les deux WSS 20 présentent aussi un port d'insertion relié à un dispositif d'insertion 40 via un coupleur 8.

Le dispositif d'extraction 30 sert à extraire du trafic au niveau du noeud 1. Il comporte un commutateur à sélection de longueurs d'onde 31 pour sélectionner les canaux à extraire et régler leur puissance de sortie, et un ensemble de récepteurs optiques accordables 32 relié à la sortie du WSS 31 par un coupleur 33. D'autres architectures sont aussi possibles.

Le dispositif d'insertion 40 sert à insérer du trafic au niveau du noeud 1. Il comporte un ensemble de sources optiques accordables modulées 41, un combineur 42 et un amplificateur 43. D'autres architectures sont aussi possibles.

Les commutateurs à sélection de longueurs d'onde 20 et 31 sont commandés par une unité de commande 11 du noeud via des liaisons de commande 12. Les amplificateurs 6 sont aussi commandés par l'unité de commande 11 via des liaisons de commande 13. L'unité de commande 11 remplit plusieurs fonctions représentées schématiquement par des modules fonctionnels sur la figure 2.

Un module d'interface de contrôle 15 reçoit et émet des messages de contrôle sur des canaux de contrôle 16, reliés par exemple à un appareil de gestion de réseau ou à d'autres noeuds du réseau. Les canaux de contrôle peuvent être transportés dans les mêmes liens que les données, par exemple sur une longueur d'onde dédiée, ou sur des liens séparés du plan de données, par exemple sur un réseau de contrôle superposé au réseau de données.

Un module de gestion des connexions 14 extrait des messages de contrôle les informations concernant les connexions déjà établies ou à établir ou à supprimer ou à modifier et tient à jour une table des connexions dans un stockage de données 18 du noeud 1. La table des connexions peut contenir diverses informations relatives aux connexions émises, reçues ou passant par le noeud 1, notamment origine, destination, caractéristiques de trafic (débit, qualité de service) et ressources de transport allouées (ports, longueurs d'onde, etc.) Le module de gestion des connexions 14 traduit ces informations en instructions de commutation pour un module de pilotage 19 qui est chargé de produire les signaux de commande des WSS sur les liaisons 12 et les signaux de commande des amplificateurs sur les liaisons 13.

Un module de contrôle d'atténuation 17 exploite des signaux de rétroaction 22 représentant respectivement le spectre de puissance du signal WDM obtenu à la sortie de chacun des WSS 20 pour mettre en oeuvre une procédure de régulation automatique des WSS. Le module de contrôle d'atténuation 17 fournit au module de pilotage 19 des instructions de contrôle d'atténuation pour ajuster la puissance de chaque canal en fonction d'un profil de puissance désiré prédéterminé et des niveaux de puissance effectivement mesurés. Pour produire les signaux de rétroaction 22, un coupleur 23 est placé à la sortie de chaque WSS 20 pour prélever une petite portion du signal de sortie et l'envoyer dans un dispositif de mesure de puissance des canaux 24. Le dispositif de mesure de puissance 24 mesure un spectre de puissance des canaux de longueurs d'onde qu'il reçoit. Le module de contrôle d'atténuation 17 compare ce spectre mesuré à un profil de puissance désiré prédéterminé, qui est par exemple stocké dans une mémoire de l'unité de commande 11. Le profil de puissance désiré peut avoir différentes formes, par exemple une forme sensiblement plate correspondant à des puissances égales pour tous les canaux, ou une forme non plate correspondant à une puissance plus élevée dans certaines partie du spectre et plus faible dans d'autres parties du spectre. Un profil non plat peut notamment être choisi pour compenser une courbe de gain non uniforme des amplificateurs optiques de type EDFA.

On va décrire maintenant un fonctionnement du réseau de la figure 1, dans un cas où les noeuds sont réalisés conformément à la figure 2, permettant d'établir une connexion et d'effectuer le réglage du signal dans le plan de données du réseau.

On désigne par plan de contrôle du noeud l'ensemble des éléments, fonctionnalités et protocoles participant au contrôle du réseau, notamment les fonctionnalités fournies par une pile protocolaire GMPLS, par exemple le routage, la signalisation et l'ingénierie de trafic. On désigne par plan de données du noeud l'ensemble des éléments, fonctionnalités et protocoles participant au transfert et au transport des données. La distinction entre plan de contrôle et plan de données est une distinction logique qui ne correspond pas nécessairement à des éléments matériels distincts.

Le terme ressource de transport peut recouvrir différents éléments physiques du réseau selon les technologies de transport employées. Par exemple, dans le noeud photonique 1, des ressources de transport sont les longueurs d'ondes, les ports d'entrée 2, les ports de sortie 3, les sources optiques 41 et les récepteurs optiques 32.

Avec d'autres technologies de transport, les ressources peuvent aussi inclure de l'espace mémoire pour des files d'attente, du temps CPU, des intervalles temporels pour un multiplexage TDM, etc.

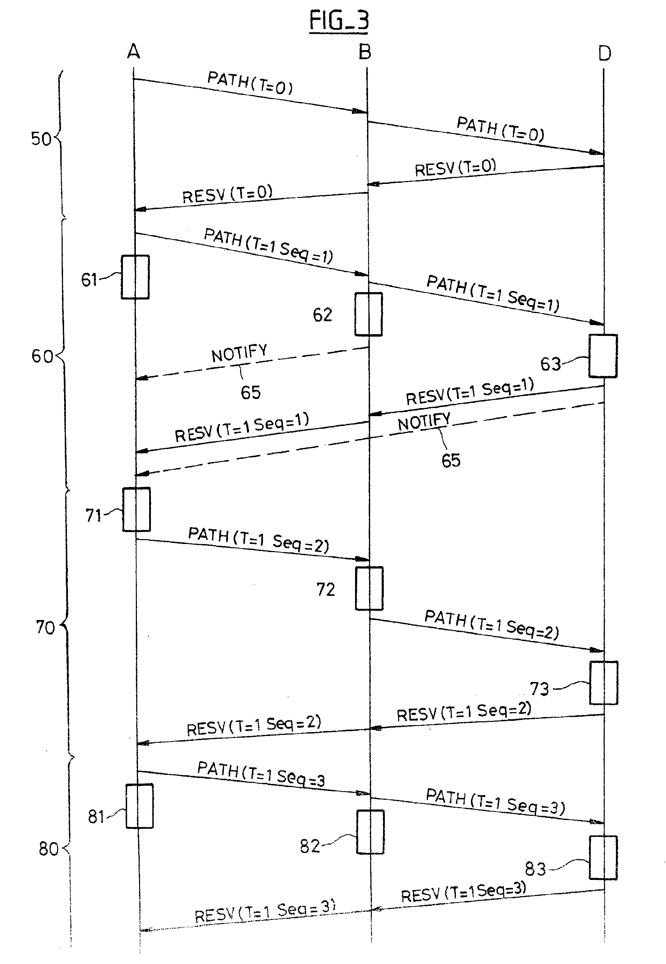

En référence à la figure 3, on suppose que la connexion à établir consiste en un canal de longueur d'onde λi déterminé qui doit être émis par le noeud A, transiter de manière transparente par le noeud B et être reçu par le noeud D. La manière de déterminer la route et la longueur d'onde à utiliser n'est pas décrite ici. Toute technique connue de routage et d'allocation de longueur d'onde (routing and wavelength assignment) peut être utilisée.

L'établissement de la connexion suppose de transmettre des instructions correspondantes aux noeuds impliqués. Dans un mode de réalisation représenté sur la figure 3, convenant par exemple pour un réseau à plan de contrôle GMPLS, ces instructions sont transmises par des messages de signalisation du protocole RSVP-TE. Dans ce cas le module d'interface de contrôle 15 des noeuds comporte un module de signalisation RSVP-TE. Les conventions exposées dans les recommandations de l'IETF peuvent être utilisées, notamment la RFC 3473.

On propose ici d'utiliser l'objet ADMIN_STATUS tel que représenté dans le tableau 4 pour indiquer aux noeuds les étapes successives devant être effectuées afin d'établir la connexion. Par rapport à la RFC 3473, cet objet est ici modifié par l'ajout d'un champ Seq destiné à transporter un numéro de séquence de l'étape courante lorsque le bit T est activé. Cet objet est inclus dans tous les messages PATH et RESV représentés.

Dans le mode de réalisation représenté, la procédure d'établissement de connexion comporte quatre étapes successives :
- dans l'étape 50, des messages PATH et RESV sont échangés le long de la connexion selon la technique connue pour réserver des ressources de transport des noeuds en conformité avec les caractéristiques requises pour la connexion, et allouer et distribuer les labels correspondants. Dans cette étape le bit T n'est pas activé, ce qui signifie que l'établissement du signal dans le plan de donnée n'a pas commencé. Les réservations sont effectuées uniquement dans le plan de contrôle et les tables des connexions des noeuds A, B et D sont mises à jour en conséquence.
- l'étape 60 est une étape de préparation du réglage du signal dans le plan de données,
- l'étape 70 est une étape de réglage de puissance du signal dans le plan de données,
- l'étape 80 est une étape de terminaison du réglage du signal dans le plan de données.

Dans les étapes 60, 70 et 80, le bit T est activé pour indiquer que le test de la connexion est en cours. De plus le champ Seq est utilisé pour transporter un numéro de séquence de l'étape courante, par exemple Seq=1 pour l'étape 60, Seq=2 pour l'étape 70 et Seq =3 pour l'étape 80. C'est le noeud d'entrée A qui contrôle le déroulement des étapes en émettant à chaque fois un message PATH comprenant le numéro de séquence correspondant. De plus le noeud 1 attend de recevoir un acquittement des noeuds B et D avant de déclencher l'étape suivante.

Par exemple, la séquence de messages de signalisation illustrée sur la figure 3 peut être utilisée pour contrôler la procédure d'établissement de connexion. Sur la figure 3, les flèches entre les noeuds A, B et D représentent des messages de signalisation et les blocs disposés au niveau des noeuds représentent des opérations locales effectuées par les noeuds.

Pour chaque valeur du champ Seq, chaque noeud effectue une ou plusieurs opérations locales spécifiques. Ces opérations peuvent être par exemple définies par une table des opérations locales stockée dans le stockage de données 18 du noeud. Le tableau 1 donne un exemple du contenu d'une telle table, convenant pour des noeuds conformes à la figure 2.

Dans l'étape 60, il s'agit de préparer les composants du plan de donnée impliqués dans la connexion à transporter le canal de longueur d'onde λi sans perturber le trafic déjà établi. Comme les WSS 20 sont ici soumis à une procédure de régulation automatique qui vise à équilibrer les puissances des différents canaux, cette procédure doit être désactivée pendant la phase d'allumage du nouveau canal. Dans le cas contraire, la montée en puissance du nouveau canal pourrait entraîner des modifications transitoires instables des autres canaux par le WSS, ayant pour effet des erreurs de transmission dans le trafic déjà établi. L'étape 60 peut aussi être utilisée pour libérer des équipements, par exemple un dispositif de mesure 24, dont l'usage va être temporairement dédié au nouveau canal pendant l'étape de réglage 70.

Par ailleurs, certains composants situés sur chemin de la connexion, notamment les amplificateurs 6, fonctionnent normalement dans un mode visant à stabiliser l'état du réseau. Ce mode de fonctionnement n'est généralement pas compatible avec des actions volontaires provoquant des changements substantiels des signaux dans le réseau. Ainsi, il est préférable de commuter ces composants, notamment les amplificateurs, dans un mode de fonctionnement compatible avec les effets transitoires pendant la phase transitoire d'allumage du canal de longueur d'onde λi pour éviter d'affecter les signaux des connexions déjà établies par des instabilités.

Cette étape 60 peut être effectuée parallèlement dans tous les noeuds de la connexion. On choisit donc de la déclencher par un message PATH qui est retransmis immédiatement par le noeud B au noeud D.

Dans l'étape 70, les noeuds commencent effectivement à laisser passer le signal optique de la nouvelle connexion à travers les WSS 20 (noeuds A et B) ou le WSS 31 (noeud D). Pour cela, au niveau de chaque noeud, on règle le niveau de puissance du signal optique en réglant l'atténuation que les WSS 20 et 31 appliquent au canal λi. Cette atténuation est initialement réglée pour atteindre un niveau de puissance de référence. Ce niveau de puissance peut être contrôlé par l'unité de commande 11 à l'aide du dispositif de mesure de puissance 24. Puis l'unité de commande 11 réactive la régulation automatique de l'atténuation dans le WSS correspondant. L'étape 70 doit être effectuée séquentiellement dans l'ordre des noeuds. En effet, la régulation automatique de l'atténuation dans le WSS basée sur une boucle de rétroaction ne peut converger de manière fiable que si le signal optique est sensiblement stable à l'entrée du noeud. Il faut donc que la puissance du signal soit sensiblement stabilisée au niveau des noeuds précédents avant qu'un noeud réactive cette boucle de régulation. On choisit donc de déclencher l'étape 70 par un message PATH qui n'est transmis par un noeud au noeud suivant qu'après achèvement des opérations correspondantes par le noeud émetteur.

L'étape 80 consiste à replacer les amplificateurs dans le mode de fonctionnement normal. Comme l'étape 60, cette étape peut être effectuée parallèlement dans tous les noeuds de la connexion. On choisit donc de la déclencher par un message PATH qui est retransmis immédiatement par le noeud B au noeud D.

A chaque étape, le noeud d'entrée A attend de recevoir une information d'acquittement de tous les noeuds de la connexion avant de déclencher l'étape suivante. Une information d'acquittement désigne ici une information signifiant que le noeud a achevé avec succès les opérations locales correspondant à l'étape courante. Dans le mode de réalisation représenté sur la figure 3, cette information d'acquittement consiste en un message RESV portant les mêmes indicateurs d'étape que le message PATH auquel il répond. Toutefois cette convention simple n'est qu'un choix possible parmi d'autres. Le noeud de sortie D transmet à chaque fois le message RESV au noeud B dès achèvement des opérations locales correspondant à l'étape courante. Le noeud B retransmet ce message au noeud A dès achèvement des opérations locales correspondant à l'étape courante ou dès réception du message RESV si les opérations se sont terminées auparavant. La figure 3 illustre la deuxième situation.

En variante, l'information d'acquittement peut être transmise au noeud d'entrée A séparément par chaque noeud dès achèvement des opérations correspondantes. Pour cela, dans le protocole RSVP-TE, un message NOTIFY peut être utilisé, comme montré par les flèches en trait interrompu 65. Bien que cette variante n'ait été représentée que dans l'étape 60 sur la figure 3, elle est utilisable dans l'une quelconque des étapes ou dans plusieurs d'entre elles.

Comme visible à la troisième colonne du tableau 1, une possibilité pour indiquer aux noeuds les conditions dans lesquelles le message de contrôle PATH doit être transmis au noeud suivant à chaque étape est de placer cette information dans la table des opérations locales. En variante cette information peut être placée dans une autre structure de données.

Dans ce mode de réalisation fondé sur le protocole RSVP-TE, on voit qu'un même protocole est utilisé à la fois pour réserver les ressources de la connexion, gérer la qualité de service et contrôler la séquence d'établissement du signal dans le plan de données. Il est résulte une simplification pour le déploiement du plan de contrôle du réseau, notamment sous la forme d'une pile protocolaire GMPLS, et une facilité d'adaptation à des technologies hétérogènes. Dans une variante de réalisation, les opérations de réservations des ressources dans le plan de contrôle peuvent être effectuées au sein de l'étape 60 et non au cours d'une étape précédente, ce qui permet de diminuer le nombres d'échanges de messages de contrôle.

Dans l'exemple de la figure 3, l'indication de l'étape courante est donnée aux noeuds par la combinaison des champs T et Seq de l'objet ADMIN_STATUS. Ce choix de champs est donné à titre illustratif et peut faire l'objet d'autres conventions. Dans un mode de réalisation, on prévoit de porter cette information dans un nouvel objet, dénommé par exemple TEST_SPEC, dans les messages PATH et RESV du protocole RSVP-TE, comme représenté dans les tableaux 2 et 3. Outre un ou plusieurs champs d'indication d'étape, cet objet peut comporter des champs pour différentes informations relatives à l'étape courante, par exemple un numéro de séquence, un numéro de séquence hiérarchisé permettant d'identifier des étapes et des sous-étapes au sein d'une même étape, un descripteur d'étape, un descripteur de sous-étape, etc. Le nom de l'objet et sa position dans le message sont purement illustratifs dans les tableaux 2 et 3. D'autres conventions sont possibles. Selon un mode de réalisation, cet objet sert à préciser la sémantique du bit T de l'objet ADMIN_STATUS et n'est donc pris en compte par les noeuds que dans le cas où le bit T est activé.

La procédure d'établissement de connexion décrite à la figure 3 est purement illustrative et non limitative. Les échanges de messages décrits ci-dessus peuvent être adaptés pour contrôler différentes procédures d'établissement ou de suppression d'une connexion ayant un nombre plus ou moins élevé d'étapes et/ou des opérations locales différentes de celles décrites ci-dessus. Par ailleurs, la figure 3 ne décrit pas exhaustivement les échanges de messages de signalisation entre les noeuds A, B et D. Davantage de messages de signalisation peuvent être échangés entre les noeuds au cours de cette procédure, par exemple pour respecter des cadences de transmission imposées par des temporisateurs du protocole de signalisation et/ou pour remplir d'autres fonctions, par exemple rafraichir les connexions. Par exemple, pendant la période entre le début de l'étape 62 et la fin de l'étape 72, le noeud B pourrait transmettre un ou plusieurs messages PATH au noeud D pour l'informer régulièrement de l'état courant de la procédure. Dans cet exemple, le paramètre Seq=1 serait transmis pendant cette période.

L'utilisation du protocole RSVP-TE n'est pas le seul moyen de coordonner l'établissement de la connexion par les noeuds. D'autres protocoles de signalisation ou de gestion de réseau peuvent aussi être employés.

La description de l'unité de commande 11 donnée ci-dessus n'est pas exhaustive. L'unité de commande peut comporter bien d'autres fonctions et modules, par exemple pour piloter et configurer des transpondeurs optiques, récepteurs optiques et autres éléments actifs du noeud. Dans un mode de réalisation particulier, elle comporte toute une pile protocolaire GMPLS. En outre, bien qu'on ait représenté une seule unité de commande, il est clair que les fonctions décrites peuvent être distribuées dans plusieurs circuits, par exemple sous la forme d'un contrôleur de haut niveau pour le noeud et de plusieurs contrôleurs de bas niveau dédiés chacun à un WSS.

Les modes de réalisations décrits ci-dessus peuvent être facilement adaptés à d'autres architectures de noeuds, d'autres types de signaux, d'autres techniques de commutations, notamment dans le domaine électronique, et d'autres dispositifs de modification de puissance. Par exemple, le document EP1161115 décrit une architecture de noeud optique dans laquelle le réglage de puissance est effectué par des atténuateurs optiques variables ou des amplificateurs.

Certains des éléments représentés, notamment les unités de commande, et les différents modules, peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL. Cette liste n'est pas exhaustive.

Un appareil de gestion de réseau peut être un équipement matériel, par exemple un micro-ordinateur, une station de travail, un appareil connecté à l'Internet ou tout autre dispositif de communication dédié ou à usage général. Des programmes logiciels exécutés par cet appareil remplissent des fonctions de gestion du réseau pour contrôler des éléments de réseau.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes. Plusieurs moyens ou modules peuvent être représentés par un même élément matériel.

Dans les revendications, tout signe de référence entre parenthèses ne saurait être interprété comme une limitation de la revendication.

**Tableau 1 : exemple de table des opérations locales**

| **Valeur du champ Seq** | **Liste des opérations locales** | **Mode de transmission du message PATH** |
|---|---|---|
| 1 | - Identifier le WSS impliqué dans la connexion | Immédiat |
| | - désactiver la régulation automatique du WSS | |
| | - régler l'atténuation du nouveau canal dans le WSS au niveau maximum | |
| | - identifier l'amplificateur impliqué dans la connexion | |
| | - régler l'amplificateur dans un mode de fonctionnement compatible avec les effets transitoires | |
| 2 | - Régler l'atténuation du nouveau canal dans le WSS à un niveau de référence | Après achèvement des opérations |
| | - Réactiver la régulation automatique du WSS | |
| 3 | - Régler l'amplificateur dans un mode de fonctionnement normal | Immédiat |

**Tableau 2 : exemple de format du message PATH**

| |
|---|
| ```
 <Path Message> ::= <Common Header> [ <INTEGRITY> ]
             [[<MESSAGE_ID_ACK>\| <MESSAGE_ID_NACK>]... ]
             [<MESSAGE_ID>]
             <SESSION> <RSVP_HOP>
             <TIME_VALUES>
             [<EXPLICIT_ROUTE> ]
             <LABEL_REQUEST>
             [ <PROTECTION> ]
              [<LABEL_SET> ... ]
              [<SESSION_ATTRIBUTE> ]
              [<NOTIFY_REQUEST>... ]
              [<ADMIN_STATUS>][<TEST_SPEC>]
              [<ASSOCIATION>... ]
              [<PRIMARY_PATH_ROUTE>... ]
              [<POLICY_DATA>... ]
              <sender descriptor>
``` |

**Tableau 3 : exemple de format du message RESV**

| |
|---|
| ```
  <Resv Message>::= <Common Header> [<INTEGRITY> ]
             [[<MESSAGE_ID_ACK>\| <MESSAGE_ID_NACK>] ...]
             [<MESSAGE_ID> ]
             <SESSION> <RSVP_HOP>
             <TIME_VALUES>
             [<RESV_CONFIRM>][<SCOPE>]
             [<PROTECTION>]
             [<NOTIFY_REQUEST>]
             [<ADMIN_STATUS>][<TEST_SPEC>]
             [<POLICY_DATA>...]
             <STYLE> <flow descriptor list>
``` |

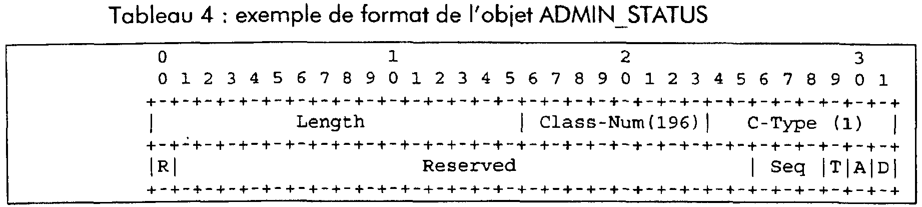

## Revendications

1. Procédé pour contrôler l'établissement d'une connexion photonique dans un réseau optique, ledit établissement de connexion comportant une séquence d'étapes (60, 70, 80) devant être effectuées successivement, dans lequel ladite séquence inclut une étape (70) de réglage de puissance d'un signal de ladite connexion photonique, ledit procédé comprenant les étapes consistant à :
transmettre un message de contrôle de noeud en noeud le long d'un chemin de ladite connexion depuis un noeud d'entrée (A) jusqu'à un noeud de sortie (D) de la connexion, ledit message de contrôle comportant un champ d'indication d'étape pour indiquer ladite étape de réglage de puissance (70) en tant qu'étape courante de l'établissement de la connexion,
effectuer une opération locale de réglage de puissance dudit signal (72) correspondant audit champ d'indication d'étape au niveau d'au moins un noeud le long du chemin de la connexion en réponse à la réception dudit message de contrôle,ledit au moins un noeud (B) transmettant ledit message de contrôle avec le champ d'indication d'étape au noeud suivant (D) après avoir terminé ladite opération de réglage de puissance,
transmettre un acquittement d'étape depuis ledit au moins un noeud audit noeud d'entrée de la connexion après avoir terminé ladite opération locale de réglage de puissance correspondant au champ d'indication d'étape,
en réponse à la réception de l'acquittement d'étape dudit au moins un noeud, transmettre un autre message de contrôle de noeud en noeud le long du chemin de la connexion depuis le noeud d'entrée jusqu'au noeud de sortie de la connexion, dans lequel ledit champ d'indication d'étape indique une étape suivante (80) dans ladite séquence d'étapes en tant qu'étape courante de l'établissement de la connexion.

2. Procédé selon la revendication 1, dans lequel le noeud de sortie dé la connexion transmet l'acquittement d'étape en réponse à la réception dudit message de contrôle dans un second message de contrôle devant être transmis de noeud en noeud le long du chemin de la connexion jusqu'au noeud d'entrée, ledit second message de contrôle comportant le champ d'indication d'étape auquel l'acquittement d'étape correspond.

3. Procédé selon la revendication 1, dans lequel un noeud (B, D) du chemin de connexion transmet un message d'acquittement (65) au noeud d'entrée (A) de la connexion après avoir terminé ladite opération locale (62, 63),
ledit noeud d'entrée transmettant ledit autre message de contrôle après réception des messages d'acquittement de tous les noeuds devant effectuer une opération locale correspondant au champ d'indication d'étape.

4. Procédé selon l'une des revendications 1 à 3, dans lequel un noeud du chemin de connexion transmet l'acquittement d'étape après avoir déterminé qu'il n'a aucune opération locale à effectuer dans l'étape courante.

5. Procédé selon l'une des revendications 1 à 4, dans lequel, en réponse à la réception du message de contrôle un ou chaque noeud du chemin de connexion accède à une table d'opérations locales stockée dans ledit noeud pour déterminer ladite opération locale devant être effectuée en fonction du champ d'indication d'étape.

6. Procédé selon la revendication 1, dans lequel l'établissement de connexion comporte une étape de préparation (60) précédant l'étape de réglage de puissance (70) et une étape de terminaison (80) succédant à l'étape de réglage de puissance.

7. Procédé selon la revendication 6, dans lequel au moins un noeud (B) du chemin de connexion comporte un dispositif de modification de puissance (20) devant être traversé par ledit signal de la connexion photonique et une unité de commande (II) contrôlant ledit dispositif de modification de puissance selon une procédure de régulation automatique, l'opération locale (62) correspondant à l'étape de préparation comportant pour ledit au moins un noeud, une désactivation de ladite procédure de régulation automatique.

8. Procédé selon l'une des revendications 1 à 7, dans lequel les messages de contrôle sont des messages d'un protocole de signalisation convenant pour réserver des ressources de communication des noeuds le long du chemin de connextion.

9. Procédé selon la revendication 8, dans lequel le protocol de signalisation est choisi dans le groupe comprenant RSVP et ses extensions.

10. Procédé selon la revendication 9, dans lequel le champ d'indication d'étape est prévu dans un objet ADMIN_STATUS du protocole RSVP-TE.

11. Procédé selon la revendication 9, dans lequel le champ d'indication d''etape est prévu dans un objet dédié au réglage de la connexion.

12. Elément de réseau optique (1, B) comportant des ressources de transport allouées à une connexion photonique pour pouvoir transporter un signal de ladite connexion photonique, des moyens de communication (15) pour échanger des messages de contrôle avec au moins un noeud adjacent situé sur un chemin de ladite connexion, et moyens de commande (11) pour effectuer les étapes consistant à :
en réponse à la réception d'un message de contrôle provenant d'un noeud d'entrée (A) de la connexion et comportant un champ d'indication d'étape correspondant à une étape (70) de réglage de puissance dudit signal de ladite connexion photonique, effectuer une opération locale de réglage de puissance dudit signal de ladite connexion photonique (72) correspondant audit champ d'indication d'étape,
transmettre ledit message de contrôle avec le champ d'indication d'étape à un noeud suivant (D) après avoir terminé ladite opération de réglage de puissance, et
transmettre en direction du noeud d'entrée de la connexion un message de contrôle comportant un acquittement d'étape après avoir terminé ladite opération locale correspondant au champ d'indication d'étape.

## Patentansprüche

1. Verfahren zur Steuerung des Aufbaus einer photonischen Verbindung in einem optischen Netzwerk, wobei der besagte Verbindungsaufbau eine Folge von Schritten (60, 70, 80) umfasst, welche nacheinander durchzuführen sind, wobei die besagte Folge einen Schritt (70) des Regelns der Stärke eines Signals der besagten photonischen Verbindung umfasst, wobei das Verfahren das Durchführen der folgenden Schritte umfasst:
Übertragen einer Steuerungsnachricht von Knoten zu Knoten entlang eines Pfads der besagten Verbindung von einem Eingangsknoten (A) an einen Ausgangsknoten (D) der Verbindung, wobei die besagte Steuerungsnachricht ein Schrittanzeigefeld enthält, um den besagten Schritt des Regelns der Stärke (70) als aktuellen Schritt des Verbindungsaufbaus anzuzeigen,
Durchführen eines lokalen Regelungsvorgangs der Stärke des besagten Signals (72), welcher dem besagten Schrittanzeigefeld in Bezug auf mindestens einen Knoten entlang des Verbindungspfads entspricht, in Reaktion auf den Empfang der besagten Steuerungsnachricht, wobei der besagte mindestens eine Knoten (B) die besagte Steuerungsnachricht mit dem Schrittanzeigefeld nach Beenden des besagten Regelungsvorgangs der Stärke an den folgenden Knoten (D) überträgt,
Übertragen einer Schrittquittierung von dem besagten mindestens einen Knoten an den besagten Verbindungseingangsknoten nach Beenden des besagten dem Schrittanzeigefeld entsprechenden lokalen Regelungsvorgangs der Stärke,
in Reaktion auf den Empfang der Schrittquittierung von dem besagten mindestens einen Knoten, Übertragen einer weiteren Steuerungsnachricht von Knoten zu Knoten entlang des Pfads der Verbindung von dem Eingangsknoten an den Ausgangsknoten der Verbindung, in welcher das besagte Schrittanzeigefeld einen folgenden Schritt (80) in der besagten Folge von Schritten als aktuellen Schritt des Verbindungsaufbaus anzeigt.

2. Verfahren nach Anspruch 1, wobei der Verbindungsausgangsknoten die Schrittquittierung in Reaktion auf den Empfang der besagten Steuerungsnachricht in einer zweiten Steuerungsnachricht, welche von Knoten zu Knoten entlang des Verbindungspfads an den Eingangsknoten zu übertragen ist, überträgt, wobei die besagte zweite Steuerungsnachricht das Schrittanzeigefeld enthält, welchem die Schrittquittierung entspricht.

3. Verfahren nach Anspruch 1, wobei ein Knoten (B, D) des Verbindungspfads nach Beenden des besagten lokalen Vorgangs (62, 63) eine Quittierungsnachricht (65) an den Eingangsknoten (A) der Verbindung überträgt,
wobei der besagte Eingangsknoten die besagte weitere Steuerungsnachricht nach Empfang der Quittierungsnachrichten aller Knoten, welche einen dem Schrittanzeigefeld entsprechenden lokalen Vorgang durchzuführen haben, überträgt.

4. Verfahren nach einem der Ansprüche 1 bis 3, wobei ein Knoten des Verbindungspfads die Schrittquittierung nach Ermitteln, dass er keinen lokalen Vorgang in dem folgenden Schritt durchzuführen hat, überträgt.

5. Verfahren nach einem der Ansprüche 1 bis 4, wobei ein oder jeder Knoten des Verbindungspfads in Reaktion auf den Empfang der Steuerungsnachricht auf eine in dem besagten Knoten gespeicherte Tabelle für lokale Vorgänge zugreift, um den besagten lokalen Vorgang, der gemäß dem Schrittanzeigefeld durchzuführen ist, zu ermitteln.

6. Verfahren nach Anspruch 1, wobei der Verbindungsaufbau einen dem Schritt des Regelns der Stärke (70) vorausgehenden Schritt der Vorbereitung (60) und einen auf den Schritt des Regelns der Stärke folgenden Schritt des Beendens (80) einschließt.

7. Verfahren nach Anspruch 6, wobei mindestens ein Knoten (B) des Verbindungspfads eine Stärkeveränderungseinrichtung (20), durch welche das besagte Signal der photonischen Verbindung laufen muss, und eine Bedieneinheit (11), welche die besagte Stärkeveränderungseinrichtung gemäß einem automatischen Regelungsverfahren steuert, umfasst, wobei der lokale Vorgang (62) dem Schritt der Vorbereitung, welcher für den besagten mindestens einen Knoten eine Deaktivierung des besagten automatischen Regelungsverfahrens umfasst, entspricht.

8. Verfahren nach einem der Ansprüche 1 bis 7, wobei die Steuerungsnachrichten Nachrichten eines Signalisierungsprotokolls sind, welches für die Reservierung des Kommunikationsressourcen der Knoten entlang des Verbindungspfads geeignet ist.

9. Verfahren nach Anspruch 8, wobei das Signalisierungsprotokoll in einer Gruppe gewählt wird, welche das RSVP und dessen Erweiterungen umfasst.

10. Verfahren nach Anspruch 9, wobei das Schrittanzeigefeld in einem ADMIN-STATUS-Objekt des RSVP-TE-Protokolls vorgesehen ist.

11. Verfahren nach Anspruch 9, wobei das Schrittanzeigefeld in einem der Regelung der Verbindung dedizierten Objekt vorgesehen ist.

12. Element eines optischen Netzwerks (1, B), umfassend einer photonischen Verbindung zugeteilte Transportressourcen, um ein Signal der besagten photonischen Verbindung transportieren zu können, Kommunikationsmittel (15), um Steuerungsnachrichten mit mindestens einem auf einem Pfad der besagten Verbindung angeordneten benachbarten Knoten auszutauschen, und Bedienungsmitel (11) um die folgenden Schritte durchzuführen:
In Reaktion auf den Empfang einer Steuerungsnachricht, welche von einem Eingangsknoten (A) der Verbindung stammt und ein einem Schritt (70) des Regelns der Stärke des besagten Signals der besagten photonischen Verbindung entsprechendes Schrittanzeigefeld enthält, Durchführen eines dem besagten Schrittanzeigefeld entsprechenden lokalen Vorgangs zur Regelung der Stärke des besagten Signals der besagten photonischen Verbindung (72),
Übertragen der besagten Steuerungsnachricht mit dem Schrittanzeigefeld an einen folgenden Knoten (D) nach Beenden des besagten Stärkeregelungsvorgangs, und
Übertragen, in Richtung des Eingangsknotens der Verbindung, eine Steuerungsnachricht mit einer Schrittquittierung nach Beenden des besagten dem Schrittanzeigefeld entsprechenden lokalen Vorgangs.

## Claims

1. A method for controlling the establishment of an optical connection in an optical network, said connection establishment comprising a sequence of steps (60, 70, 80) that must be performed in succession, wherein said sequence includes a step (70) of adjusting the power of a signal of said optical connection, said method comprising the steps consisting of: transmitting a control message node-to-node along a path of said connection from an input node (A) to an output node (D) of the connection, said control message comprising a step indication field to indicate said step of adjusting the power (70) as a current step of establishing the connection,
performing a local operation to adjust the power of said signal (72) corresponding to said step indication field within at least one node along the path of the connection in response to the receipt of said control message, said at least one node (8) transmitting said control message with the step indication field to the following node (D) after having completed said operation to adjust the power,
transmitting a step acknowledgment from said at least one node to said input node of the connection after having completed said operation to adjust the power corresponding to the step indication field,
in response to receiving said step acknowledgment of said at least one node, transmitting another control message node-to-node along the path of the connection from the input node to the output node of the connection, wherein said step indication field indicate a following step (80) within said sequence of steps as the current connection establishment step.

2. A method according to claim 1, wherein the output node of the connection transmits the step acknowledgment in response to the receipt of said control message into a second control message that must be transmitted node-to-node along the path of the connection to the input node, said second control message comprising the step indication field to which the step acknowledgment corresponds.

3. A method according to claim 1, wherein a node (B, D) of the connection path transmits an acknowledgment message (65) to the connection's input node (A) after having completed said local operation (62, 63),
said input node transmitting said other control message after receiving the acknowledgment messages from all the nodes that must perform a local operation corresponding to the step indication field.

4. A method according to one of the claims 1 to 3, wherein a node in the connection path transmits the step acknowledgment after having determined that there is no local operation to perform during the current step.

5. A method according to one of the claims 1 to 4, wherein, in response to receiving the control message, one or every node in the connection path accesses a table of local operations stored within said node in order to determine said local operation that must be performed, based on the step indication field.

6. A method according to claim 1, wherein the connection establishment comprises a preparation step (60) preceding the power adjustment step (70), and a termination step (80) following the power adjustment step.

7. A method according to claim 6, wherein at least one node (B) of the connection path comprises a power modification device (20) that must be crossed by said optical connection signal, as well as the command unit (11) controlling said power modification device using an automatic regulation procedure, with the local operation (62) corresponding to the preparation step comprising, for said at least one node, the disabling of said automatic regulation procedure.

8. A method according to one of claims 1 to 7, wherein the control messages are messages of a signaling protocol suitable for reserving the nodes' communication resources along the connection path.

9. A method according to claim 8, wherein the signaling protocol is chosen from the group comprising RSVP and its extensions.

10. A method according to claim 9, wherein the step indication field is provided within an ADMIN_STATUS object of the RSVP-TE protocol.

11. A method according to claim 9, wherein the step indication field is provided within an object dedicated to adjusting the connection.

12. An optical network component (1, B) comprising transport resources allocated to an optical connection so that it can carry a signal of said optical connection, communication means (15) for exchanging control messages with at least one adjacent node located on a path of said connection, and control means (11) for carrying out the steps consisting of: in response to receiving a control message comprising a step indication field arriving from an input node (A) of the connection and comprising a step indication field corresponding to a step (70) of adjusting the power of said signal of said photonic connection, carrying out a local operation of adjusting the power of said photonic connection (72) corresponding to said step indication field, transmitting said control message with the step indication field to a following node (D) after having completed said power adjustment operation, and transmitting to the input node of the connection a control message comprising a step acknowledgment after having completed said local operation corresponding to the step indication field.
